# EUROPEAN PATENT SPECIFICATION

(11) **EP 3 644 394 B1**
(45) Date of publication and mention of the grant of the patent: **23.02.2022**
(21) Application number: 17914208.8
(22) Date of filing: 21.06.2017
(51) Int. Cl.: B60K 1/04, B62M 6/90, H01M 50/20

(54) **BATTERY UNIT**
BATTERIEEINHEIT
BLOC-BATTERIE

(43) Date of publication of application: 29.04.2020
(60) Divisional application: 20211937.6
(73) Proprietor: Honda Motor Co., Ltd., Tokyo 107-8556 (JP)
(72) Inventor: TAKAHASHI Yasushi, Wako-shi Saitama 351-0193 (JP); KATO Takaaki, Wako-shi Saitama 351-0193 (JP)
(74) Representative: Weickmann & Weickmann PartmbB
(86) International application number: PCT/JP2017/022895
(87) International publication number: WO 2018/235204

(56) References cited:
- JP-A- H11 105 759
- JP-A- H11 120 973
- JP-A- H11 120 973
- JP-A- 2000 123 806
- JP-A- 2001 122 179
- JP-A- 2009 277 504
- JP-A- 2015 150 930
- JP-U- 3 166 805
- US-A1- 2010 136 425

## Description

### [Technical Field]

The present invention relates to a battery unit and, more particularly, to a battery unit having a case member housing a rechargeable battery for a supply of electric power to a motor or the like.

### [Background Art]

Conventionally, a battery unit is known which includes a case member housing a rechargeable battery (secondary cell) for a supply of electric power to a motor or the like, and also which is detachable/attachable from/to an object receiving a supply of electric power, such as a vehicle or the like.

JP HI 1 120973 A discloses a battery unit, in which a battery is housed in a main body with an approximately rectangular parallelepiped elongated in a vertical direction, and a connection terminal is disposed on a bottom face of the main body, wherein the battery unit includes a grab portion that is placed close to one side of a top face of the main body and the connection terminal is disposed close to the one side where the grab portion is placed.

JP 2009-277504 A discloses a battery unit for a power-assisted bicycle, in which a connection terminal is disposed on the bottom of a main body with an approximately rectangular parallelepiped elongated in a vertical direction.

### [Summary of Invention]

### [Technical Problem]

In this connection, with an increase in capacity and an increase in weight of the battery unit, there is need for added consideration given to ease of handling in a process of attachment/detachment to/from a storage component, or the like. In particular, where the connection terminal is disposed on the bottom of the main body, it is desirable that the connection terminal is not affected when the raised battery unit is grounded. Also, where the battery unit has a large weight, it is conceivable that the battery unit may be mounted on a vehicle, a charger or the like in either an inclined position with respect to the vertical direction or a lying position. However, there is need for any scheme to facilitate the attachment/detachment to/from the storage component inclined in this manner.

In this regard, the battery unit disclosed in JP 2009-277504 A is configured to include a rod-like grab portion placed on the top of the main body and a connection terminal placed on the bottom of the main body, in which consideration is not given to exercising ingenuity in making a positional relationship between the grab portion and the terminal in order to facilitate handling.

It is an object of the present invention to address the above-discussed issues in the conventional art to provide a battery unit capable of protecting a connection terminal and facilitating the process of attachment/detachment to/from a storage component.

### [Solution to Problem]

To achieve the afore-mentioned object, the present invention provides a battery unit according to claim 1.

The present invention has a first feature in that a battery unit, in which a battery (B) is housed in a main body (1a) with an approximately rectangular parallelepiped elongated in a vertical direction, and a connection terminal (17) is disposed on a bottom face (12) of the main body (1a), wherein the battery unit (1) includes a grab portion (2) that is placed close to one side of a top face (7) of the main body (1a), and the connection terminal (17) is disposed close to the one side where the grab portion (2) is placed.

To achieve the afore-mentioned object, the present invention has a second feature in that the grab portion (2) includes a rod-shaped portion that is approximately parallel to the top face (7), and the battery unit (1) includes a rod-shaped second grab portion (3) that extends approximately perpendicularly to the grab portion (2) from a central portion of the grab portion (2).

To achieve the afore-mentioned object, the present invention has a third feature in that a recess (6) is provided in the top face (7) of the main body (1a) and in a position underneath the second grab portion (2).

To achieve the afore-mentioned object, the present invention has a fourth feature in that the main body (1a) has four side faces (10, 11, 13, 15), of which the side face (13) opposite to the side face (10) on the side where the grab portion (2) is placed is formed in a flat face shape, and the remaining three side faces (10, 11, 15) are formed in a curved face shape.

To achieve the afore-mentioned object, the present invention has a fifth feature in that the second grab portion (3) extending from the grab portion (2) has one end connected to a ridge-shaped protrusion (4) that is formed on the top face (7) of the main body (1a).

### [Effects of Invention]

According to the first feature of the present invention, a battery unit, in which a battery (B) is housed in a main body (1a) with an approximately rectangular parallelepiped elongated in a vertical direction, and a connection terminal (17) is disposed on a bottom face (12) of the main body (1a), wherein the battery unit (1) includes a grab portion (2) that is placed close to one side of a top face (7) of the main body (1a), and the connection terminal (17) is disposed close to the one side where the grab portion 2 is placed. Since the grab portion is placed close to one side of the top face of the main body, when the battery unit is raised by holding the grab portion, the battery unit would be inclined about the grab portion as a fulcrum. Thus, the connection terminal is not located in a lowermost position while the battery unit is raised. Even if the battery unit is accidentally dropped, the connection terminal is not grounded first, so that it is enable to protect the connection terminal. Also, the battery unit is inclined in the raised state, and this can facilitate the storing of the battery unit into an obliquely formed storage component, and also the placement of the battery unit in a lying position from the grounded state.

According to the second feature of the present invention, the grab portion (2) includes a rod-shaped portion that is approximately parallel to the top face (7), and the battery unit (1) includes a rod-shaped second grab portion (3) that extends approximately perpendicularly to the grab portion (2) from a central portion of the grab portion (2). Therefore, it is made possible to grasp the grab portion with one of hands and grasp the second grab portion with the other hand, and in turn even if a battery unit is heavy in weight, the battery unit can be relatively effortlessly handled using both hands.

According to the third feature of the present invention, a recess (6) is provided in the top face (7) of the main body (1a) and in a position underneath the second grab portion (2). Therefore, space can be ensured for allowing fingertips to be inserted upon holding the grab portion and the second grab portion. Thus, the ease of grasping the grab portion and the second grab portion is ensured, while the amount of upward protrusion of the grab portion and the second grab portion from the top face of the main body can be reduced to enhance the strength.

According to the fourth feature of the present invention, the main body (1a) has four side faces (10, 11, 13, 15), of which the side face (13) opposite to the side face (10) on the side where the grab portion (2) is placed is formed in a flat face shape, and the remaining three side faces (10, 11, 15) are formed in a curved face shape. Therefore, upon lowering the battery unit which has been raised by holding the grab portion, the main body is laid by moving the grab portion down to a lower level than that in the state where the curved portion located in the lowermost position has been grounded, so that the side face of the flat face shape can be grounded. Therefore, if the charger or the like into which the battery unit is installed is inclined with respect to the vertical direction, the sliding operation of causing the side face of the flat face shape to abut on a wall of the charger or the like is facilitated, making it possible to reduce the force required for attachment/detachment of the battery unit.

According to the fifth feature of the present invention, the second grab portion (3) extending from the grab portion (2) has one end connected to a ridge-shaped protrusion (4) that is formed on the top face (7) of the main body (1a). Therefore, it is enable to increase the strength in a junction with the second grab portion.

### [Brief Description of Drawings]

FIG. 1 is a perspective view of a battery unit according to one embodiment of the present invention.
FIG. 2 is a perspective view of the battery unit when viewed from the bottom side.
FIG. 3 is a left side view of the battery unit.
FIG. 4 is a right side view of the battery unit.
FIG. 5 is a front view of the battery unit.
FIG. 6 is a rear view of the battery unit.
FIG. 7 is a top view of the battery unit.
FIG. 8 is a bottom view of the battery unit.
Fig. 9 is a sectional view taken along line IX-IX of Fig. 3.
Fig. 10 is a sectional view taken along line X-X of Fig. 5.
Fig. 11 is a sectional view taken along line XI-XI of Fig. 3.
Fig. 12 is a schematic diagram of an electric vehicle provided with the battery unit as a power source.
Fig. 13 is a front view of a charging station to charge the battery unit.
Fig. 14 is a right side view of the charging station.

### [Description of Embodiment]

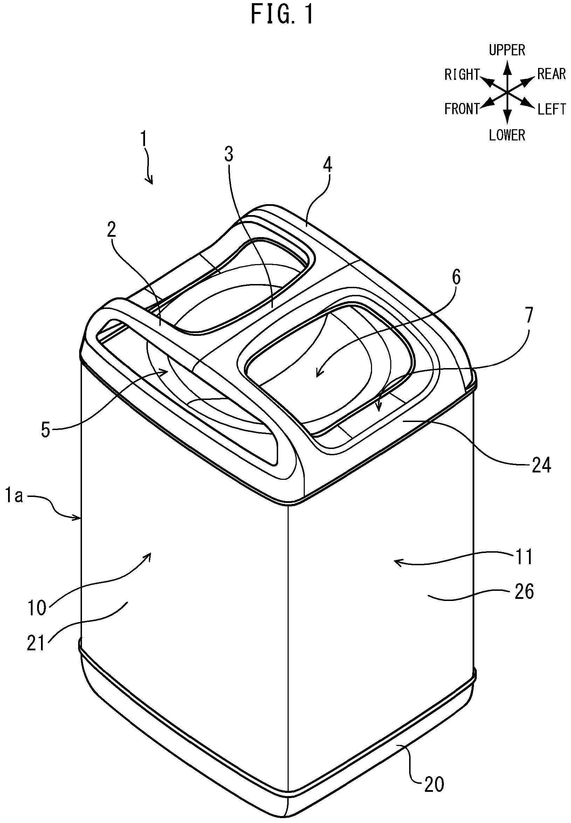

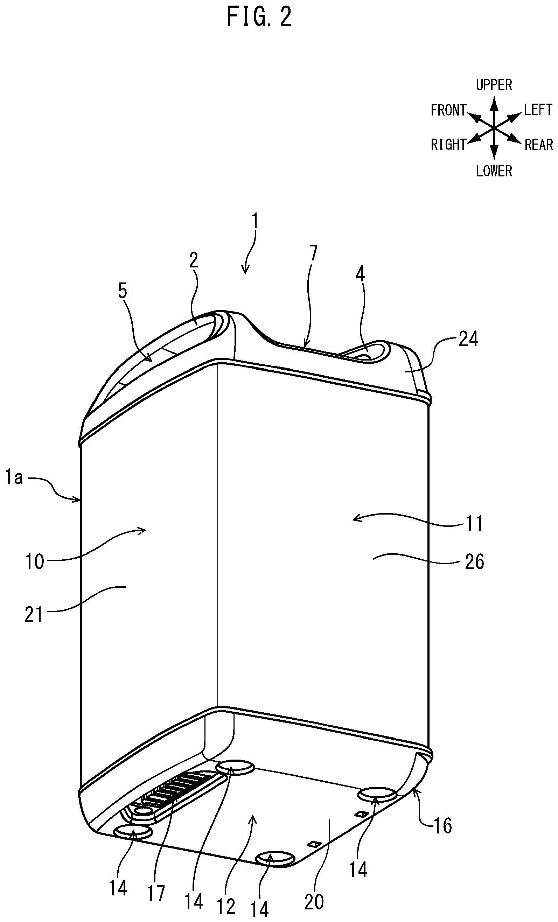

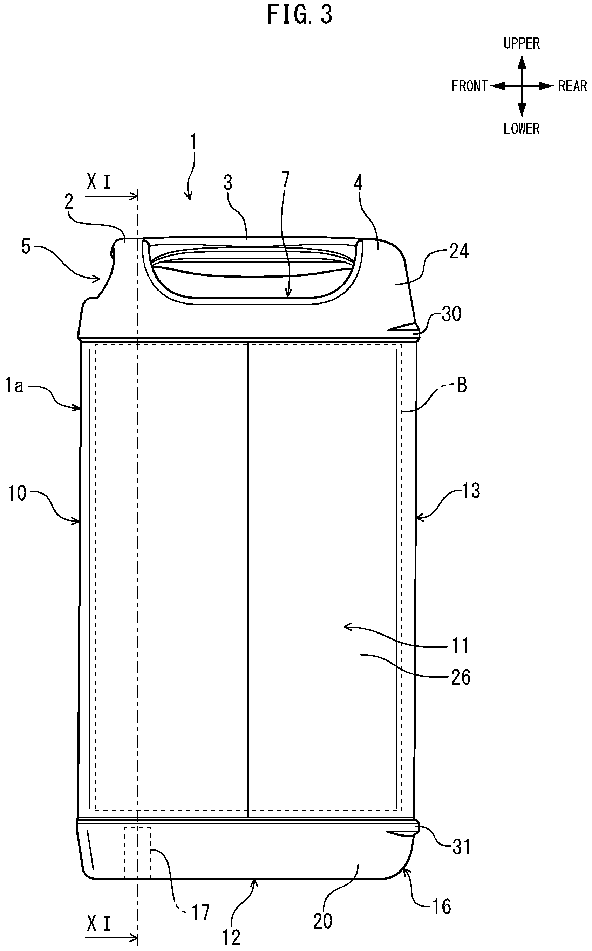

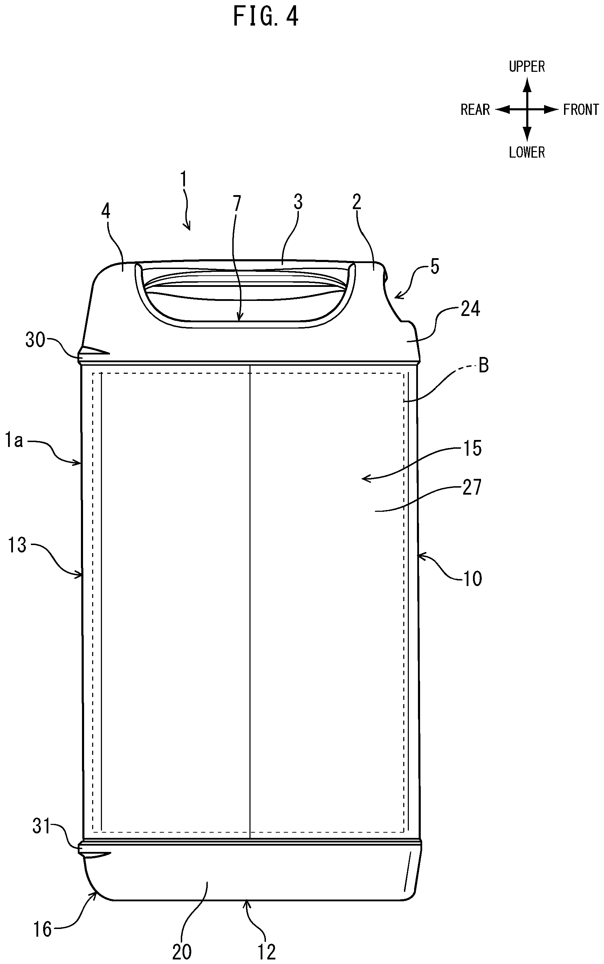

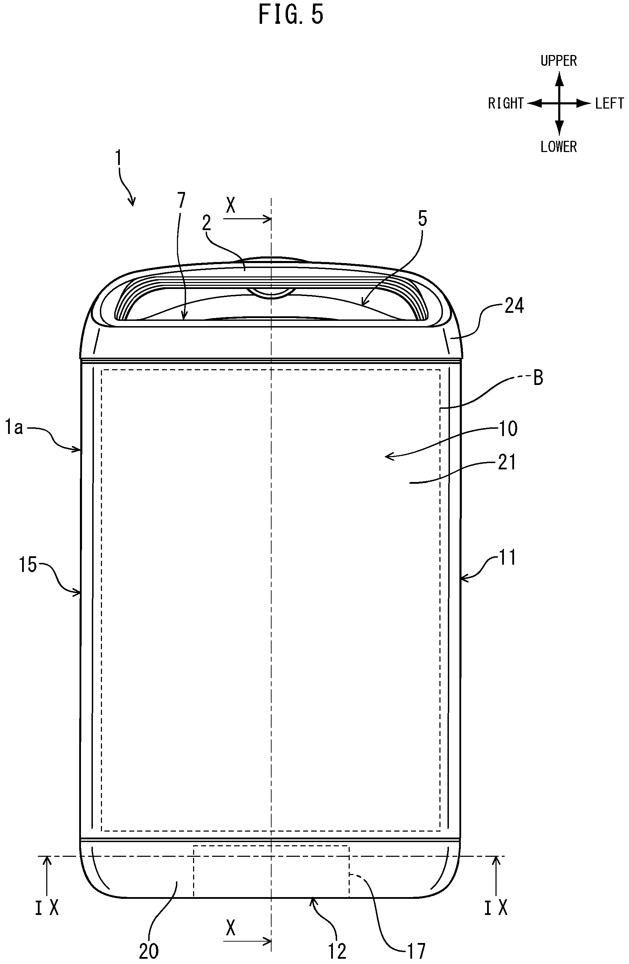

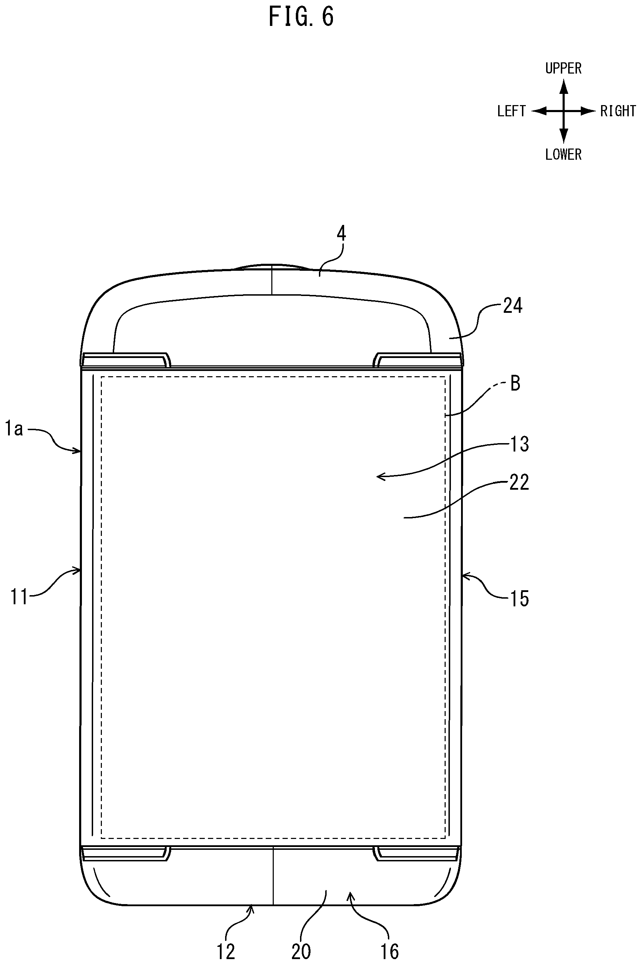

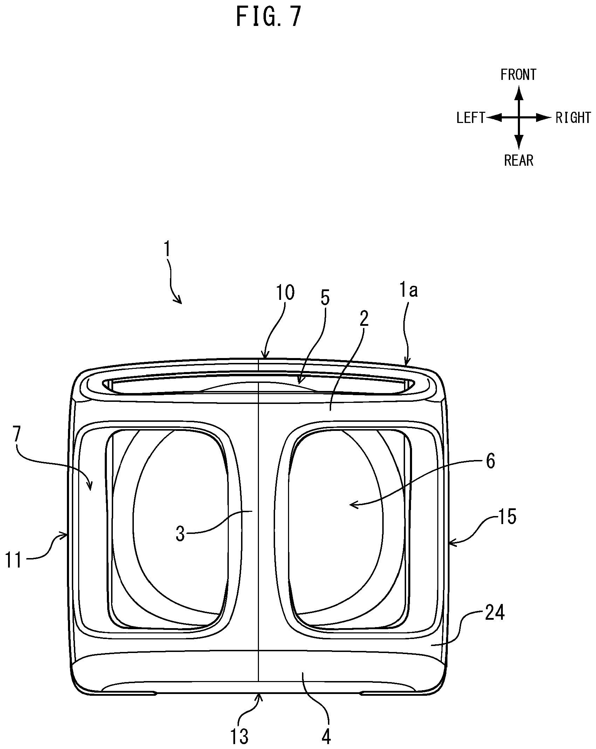

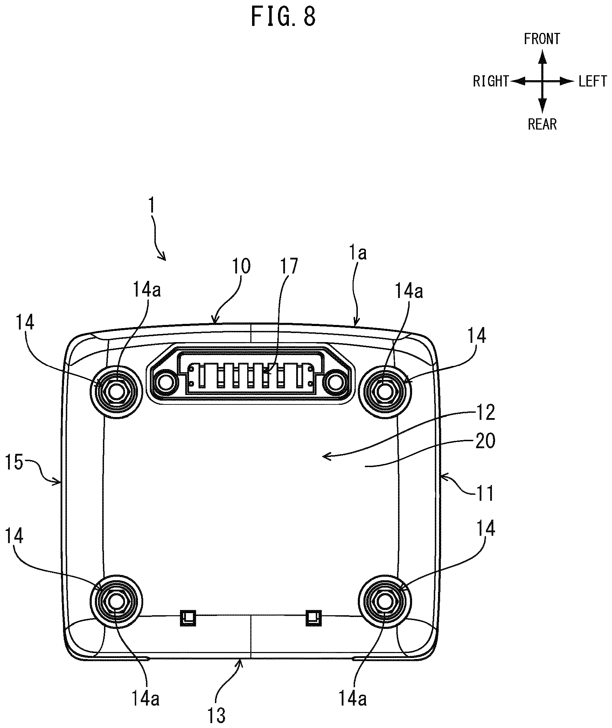

Hereinafter, a preferred embodiment according to the present invention will be described in detail with reference to the accompanying drawings. Fig. 1 is a perspective view of a battery unit 1 according to one embodiment of the present invention. And Fig. 2 is a perspective view of the battery unit 1 when viewed from the bottom side, Fig. 3 is a left side view of the same, Fig. 4 is a right side view of the same, Fig. 5 is a front view of the same, Fig. 6 is a rear view of the same, Fig. 7 is a top view of the same, and Fig. 8 is a bottom view of the same. It is noted that directional arrows pointing up, down, left, right and the like in Figs. 1 to 8 are provided for convenience of indicating the battery unit 1 with an approximately rectangular parallelepiped in the upright position, and therefore these directions on the figures do not match directions when the battery unit 1 is mounted in an electric vehicle or a charger.

A battery unit 1 has a main body 1a with an approximately rectangular parallelepiped elongated in the vertical direction in which a battery B (see Fig. 3 to Fig. 6) consisting of a lithium-ion battery or the like is housed. The four side faces of the main body 1a include a front side face 10 formed by a front plate member 21, a rear side face 13 formed by a rear plate member 22, a left side face 11 formed by a left plate member 26 and a right side face 15 formed by a right plate member 27. Each plate member is formed of a colored synthetic resin and/or the like.

On a top face 7 of the main body 1a, a rod-like grab portion 2 is provided approximately parallel to the top face 7 in a position close to the front side face 10. The grab portion 2 is formed integrally with a topside member 24 forming the top face 7, and functions as a rod-like grip when fingertips are inserted into a tunnel 5 created between the top face 7 and the grab portion 2. A second grab portion 3 extending rearward perpendicular to the grab portion 2 is also integrally formed on the rearward side in approximately the center of the grab portion 2. The second grab portion 3 is suitable for being held by one of hands when the grab portion 2 is held by the other hand, so that grasping the grab portion 2 and the second grab portion 3 with both hands facilitates the raising of the battery unit 1 which is a heavy substance. The second grab portion 3 also has a rear end formed integrally with a ridge-shaped protrusion 4 which protruding upward from the top face 7. Thus, the strength of a junction with the second grab portion 3 is significantly increased.

On approximately the center of the top face 7 of the main body 1a, a bowl-shaped recess 6 is formed in a position underneath the second grab portion 3. With the recess 6, space for allowing fingertips to be inserted into upon holding the grab portion 2 and the second grab portion 3 can be ensured, so that the ease of grasping the grab portion 2 and the second grab portion 3 is ensured. In addition to this, the amount of upward protrusion of the grab portion 2 and the second grab portion 3 from the top face 7 of the main body 1a is reduced to make it possible to enhance the strength of the battery unit 1.

Here, the battery unit 1 is a structure with the interior space of the main body 1a mostly occupied by the battery B which is a heavy substance. If the battery unit 1 is raised by holding the grab portion 2 located close to the front side face 10, the entire battery unit 1 would be inclined about the grab portion 2 as a fulcrum.

On the other hand, on a bottom face 12 of the main body 1a, a connection terminal 17 is installed for connection to an electric vehicle or a charger. Similarly to the grab portion 2, the connection terminal 17 is situated close to the front side face 10 on the bottom face 12. Specifically, if the battery unit 1 is raised by holding the grab portion 2, the battery unit 1 would be inclined, so that the connection terminal 17 is not located in a lowermost position in the raised state. Thus, even if the battery unit 1 is accidentally dropped, the connection terminal 17 is not grounded first, and therefore it is enable to protect the connection terminal 17. Also, since the battery unit 1 is inclined in the raised state, this can facilitate the storing of the battery unit 1 into a diagonally-formed storage component, and the placement of the battery unit 1 in the laying position from the grounded state.

The bottom face 12 of the main body 1a is formed of an underside member 20 made of colored synthetic resin and/or the like. The underside member 20 has four corners at which bolt recesses 14 are formed to be inserted with bolts 14a used to secure the battery B, and additionally has a through hole in which the connection terminal 17 is exposed. A curved portion 16 corresponding to a ground is formed in a lower portion on the rear-side-face-13 side of the underside member 20. This facilitates the insertion of the battery unit 1 in the raised state while sliding the battery unit 1 into the inclined storage component in a manner such that the curved portion 16 located in a lowermost position is grounded first, and this facilities the transition of the battery unit 1 from the raised state to the lying state after being grounded. Protrusions 30, 31 for engagement into a predetermined position are formed on the rear face side of the topside member 24 and the rear face side of the underside member 20.

It is noted that an inclination of the battery unit 1 when raised by holding the grab portion 2 depends on a weight of the battery unit 1 and a ratio of a dimension in the height direction to a width and a depth of the battery unit 1. In particular, the inclination angle tends to increase with decreasing the ratio of the height dimension. In the present embodiment, the inclination angle is designed to adapt an electric vehicle or a charger.

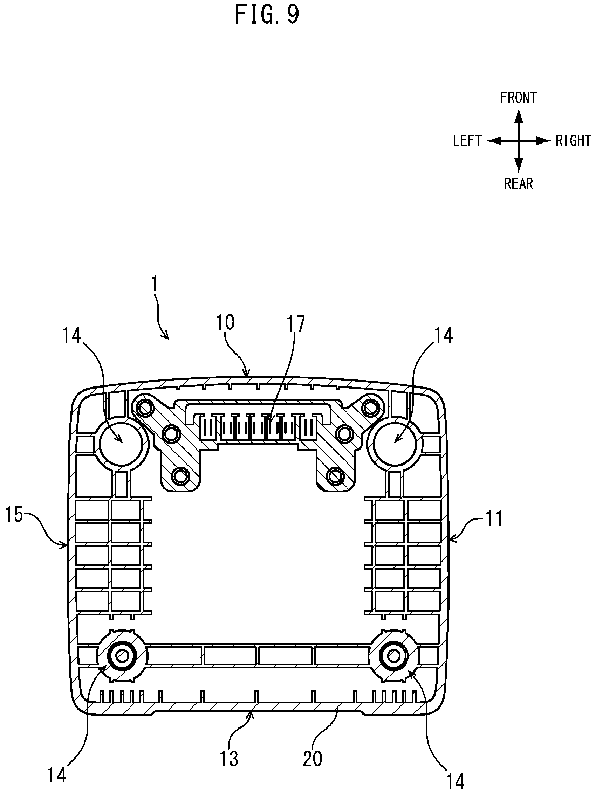

Fig. 9 is a sectional view taken along line IX-IX of Fig. 5. The connection terminal 17 is disposed between two of the bolt recesses 14 located close to the front side face 10. Of the four side faces of the main body 1a, the front side face 10, the left side face 11 and the right side face 15 are each formed in a curved face shape, and the rear side face 13 is formed in a flat face shape. In other words, the rear side face 13, which is on a side where the grab portion 2 is not placed, is formed in a flat face shape and the remaining three side faces 10, 11, 15 are formed in a curved face shape. Thus, upon lowering the battery unit 1 raised by holding the grab portion 2, the main body 1a is laid by moving the grab portion 2 down to a lower level than that in the state where the curved portion 16 located in the lowermost position has been grounded, so that the rear side face 13 of the flat face shape can be grounded. Therefore, if the charger or the like into which the battery unit 1 is installed is inclined with respect to the vertical direction, the sliding operation of causing the rear side face 13 of the flat face shape to abut on a wall of the charger or the like is facilitated, making it possible to reduce the force required for attachment/detachment of the battery unit 1.

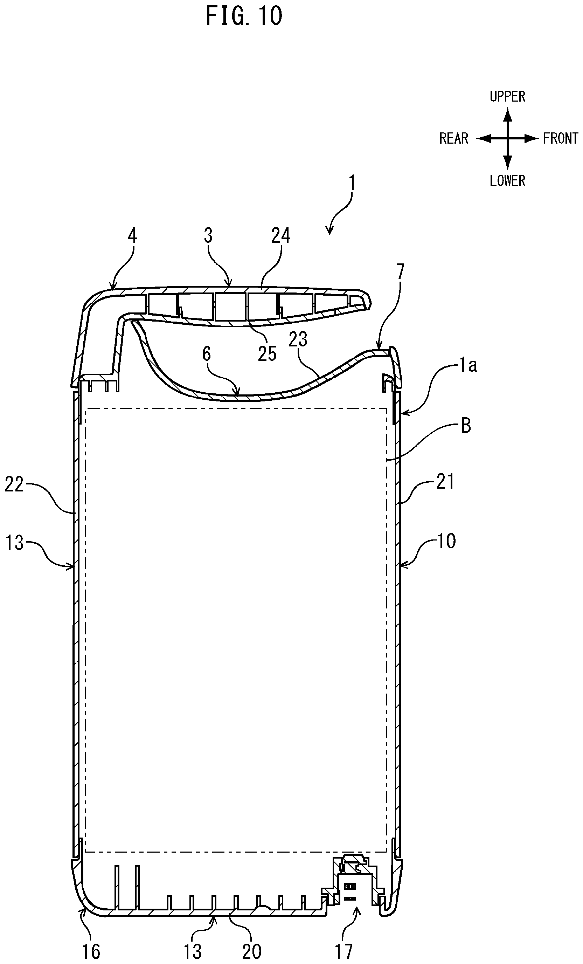

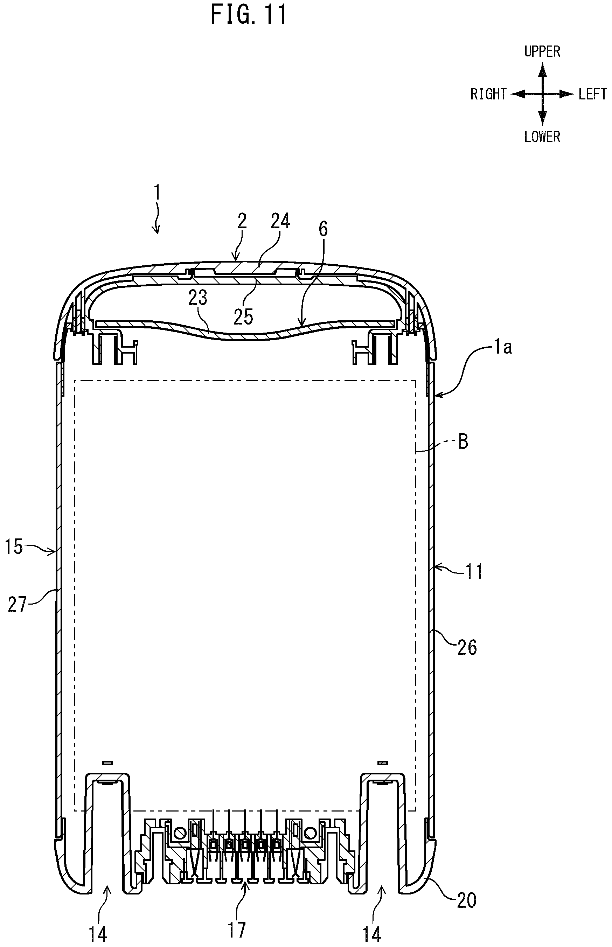

Fig. 10 is a sectional view taken along line X-X of Fig. 5. And Fig. 11 is a sectional view taken along line XI-XI of Fig. 3. The grab portion 2 and the second grab portion 3 are configured with the topside member 24 situated on the top face side thereof, and a first lid member 25 engaged with the undersurface side of the topside member 24. In this manner, the grab portion 2 and the second grab portion 3 have a hollow structure which is divided by a plurality of ribs, so that a reduction in weight of the battery unit 1 is provided while the strength of the grab portion 2 and the second grab portion 3 is ensured. The top face 7 in which the recess 6 is formed is formed of a second lid member 23 engaged with the topside member 24.

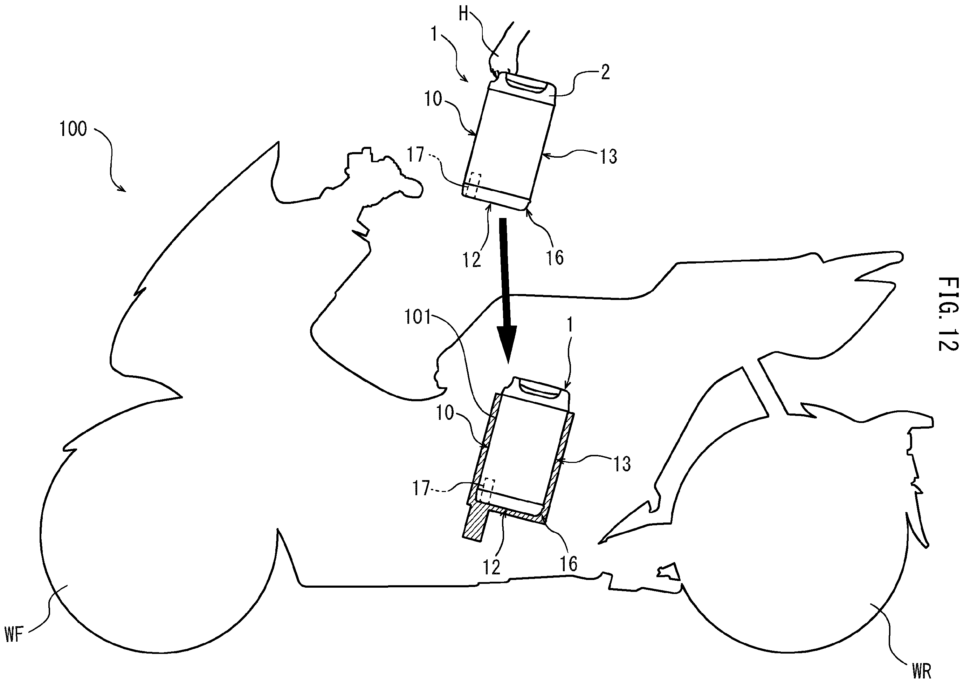

Fig. 12 is a schematic diagram of an electric vehicle 100 provided with the battery unit 1 as a power source. A storage slot 101 mounted in the electric vehicle 100 with a front wheel WF and a rear wheel WR is obliquely disposed such that the upper portion of the battery unit 1 is located on the rearward side. As corresponding to this, the battery unit 1 according to the present embodiment is configured such that, upon the battery unit 1 being raised by grasping the grab portion 2 with a hand H of an occupant or the like, the main body 1a is inclined about the grab portion 2 as a fulcrum. Thus, when the battery unit 1 is moved down toward the storage slot 101, the connection terminal 17 does not abut on a wall of the storage slot 101 and/or the like. Also, positioning is easily by causing the curved portion 16 to abut. Further, it is made easy to insert the battery unit 1 to a predetermined position while sliding the rear side face 13 of the main body 1a abutting on the wall of the storage slot 101.

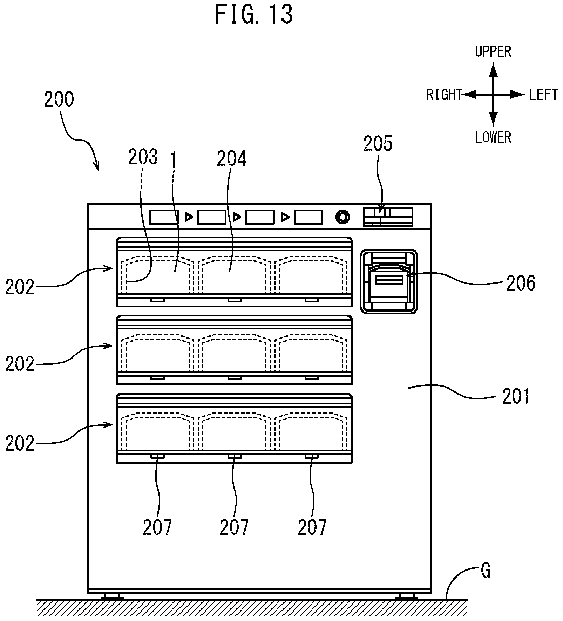

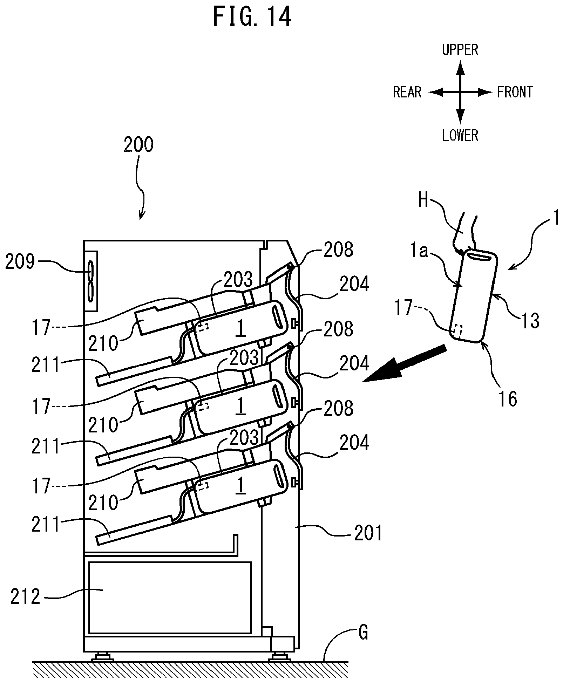

Fig. 13 is a front view of a charging station 200 to charge the battery unit 1. And Fig. 14 is a right side view of the same. The charging station 200 has a housing 201 whose outer shape is an approximately rectangular parallelepiped. The housing 201 houses a storage slot 203 into which the battery unit 1 is inserted, a controller 212, a charger 211, a cooling fan 209 and/or the like. A door 204, which can be opened and closed by a hinge 208, is placed in front of the storage slot 203. An indicator 207 indicating a charge status is disposed in a lower portion of the storage slot 203.

In the configuration in the embodiment, horizontally-long windows 202 each having the three storage slots 203 are arranged vertically in three columns, so that the nine battery units 1 in total are able to be charged at the same time. Each storage slot 203 includes a holding mechanism 210 to keep hold of the battery unit 1. On a bottom portion of the storage slot 203, a terminal is placed to be connected to the connection terminal 17 for a charge.

The storage slot 203 has sensor means installed to detect the insertion of the battery unit 1. Upon detection of the insertion of the battery unit 1, the controller 212 drives the charger 211 to perform a charge. An operation panel 205 and a payment device 206 are disposed on the front of the housing 201, the payment device 206 performing authorization of various kinds of cards, and/or the like.

As described above, in the battery unit 1 according to the present invention, the battery B is housed in the main body 1a with an approximately rectangular parallelepiped elongated in a vertical direction, and the connection terminal 17 is disposed on the bottom face 12 of the main body 1a. And the grab portion 2 is placed close to one side of the top face 7 of the main body 1a, and the connection terminal 17 is disposed close to the one side where the grab portion 2 is placed. Therefore, when the battery unit 1 is raised by holding the grab portion 2, the battery unit 1 would be inclined about the grab portion 2 as a fulcrum. Thereby, the connection terminal 17 is not located in a lowermost position while the battery unit 1 is raised. Even if the battery unit 1 is accidentally dropped, the connection terminal 17 is not grounded first, so that it is enable to protect the connection terminal 17. Also, the battery unit 1 is inclined in the raised state, and this facilitates the storing of the battery unit 1 into an obliquely formed charger or the like, and also the placement of the battery unit 1 in a lying position from the grounded state.

It should be understood that the shape and structure of the battery unit and the battery, the shape and placement position of the grab portion, the second grab portion and the protrusion, the shape and placement position of the connection terminal, and/or the like are not limited to the above embodiment and various changes are possible. The battery unit according to the present invention is not limited to be applied to a motorcycle, and can be applied to various vehicles or power units.

### [Reference Signs List]

1▪▪▪Battery unit, 1a▪▪▪Main body, 2▪▪▪Grab portion, 3▪▪▪Second grab portion, 4▪▪▪Protrusion, 5▪▪▪Tunnel, 6▪▪▪Recess, 7▪▪▪Top face, 10▪▪▪Front side face, 11▪▪▪Left side face, 12▪▪▪Bottom face, 13▪▪▪Rear side face, 14▪▪▪Bolt recesses, 15▪▪▪Right side face, 16▪▪▪Curved portion, 17▪▪▪Connection terminal, 20▪▪▪ Underside member, 21▪▪▪Front plate member, 22▪▪▪Rear plate member, 24▪▪▪ Topside member, 26▪▪▪Left plate member, 27▪▪▪Right plate member, B▪▪▪Battery

## Claims

1. A battery unit, in which a battery (B) is housed in a main body (1a) with an approximately rectangular parallelepiped elongated in a vertical direction, and a connection terminal (17) is disposed on a bottom face (12) of the main body (1a),
wherein the battery unit (1) includes a grab portion (2) that is placed close to one side of a top face (7) of the main body (1a),
the connection terminal (17) is disposed close to the one side where the grab portion (2) is placed,
the grab portion (2) includes a rod-shaped portion that is approximately parallel to the top face (7), and
the battery unit (1) includes a rod-shaped second grab portion (3) that extends approximately perpendicularly to the grab portion (2) from a central portion of the grab portion (2).

2. The battery unit according to claim 1,
wherein a recess (6) is provided in the top face (7) of the main body (1a) and in a position underneath the second grab portion (2).

3. The battery unit according to claim 1 or 2,
wherein the second grab portion (3) extending from the grab portion (2) has one end connected to a ridge-shaped protrusion (4) that is formed on the top face (7) of the main body (1a).

4. The battery unit according to claim 1 or 2,
wherein the main body (1a) has four side faces (10, 11, 13, 15), of which the side face (13) opposite to the side face (10) on the side where the grab portion (2) is placed is formed in a flat face shape, and the remaining three side faces (10, 11, 15) are formed in a curved face shape.

## Patentansprüche

1. Batterieeinheit, in der eine Batterie (B) in einem Hauptkörper (1a) mit einem in vertikaler Richtung länglichen angenähert rechteckigen Quader aufgenommen ist, und ein Verbindungsanschluss (17) an einer Bodenfläche (12) des Hauptkörpers (1a) angeordnet ist,
wobei die Batterieeinheit (1) einen Griffabschnitt (2) enthält, der sich nahe einer Seite einer oberen Fläche (7) des Hauptkörpers (1a) befindet,
der Verbindungsanschluss (17) nahe der einen Seite angeordnet ist, wo sich der Griffabschnitt (2) befindet,
der Griffabschnitt (2) einen stangenförmigen Abschnitt enthält, der zur oberen Fläche (7) angenähert parallel ist, und
die Batterieeinheit (1) einen stangenförmigen zweiten Griffabschnitt (3) enthält, der sich von einem mittleren Abschnitt des Griffabschnitts (2) angenähert orthogonal zu dem Griffabschnitt (2) erstreckt.

2. Die Batterieeinheit nach Anspruch 1, wobei eine Vertiefung (6) in der oberen Fläche (7) des Hauptkörpers (1a) und in einer Position unterhalb des zweiten Griffabschnitts (2) vorgesehen ist.

3. Die Batterieeinheit nach Anspruch 1 oder 2, wobei sich der von dem Griffabschnitt (2) erstreckende zweite Griffabschnitt (3) ein Ende aufweist, das mit einem stegförmigen Vorsprung (4) verbunden ist, der auf der oberen Fläche (7) des Hauptkörpers (a) ausgebildet ist.

4. Die Batterieeinheit nach Anspruch 1 oder 2, wobei der Hauptkörper (1a) vier Seitenflächen (10, 11, 13, 15) aufweist, von der die Seitenfläche (13), die der Seitenfläche (10) an der Seite gegenüberliegt, wo sich der Griffabschnitt (2) befindet, in einer flachen Flächenform ausgebildet ist, und die verbleibenden drei Seitenflächen (10, 11, 15) in einer gekrümmten Flächenform ausgebildet sind.

## Revendications

1. Bloc-batterie, dans lequel une batterie (B) est logée dans un corps principal (1a) avec un parallélépipède approximativement rectangulaire allongé dans une direction verticale, et une borne de connexion (17) est disposée sur une face inférieure (12) du corps principal (1a),
dans lequel le bloc-batterie (1) comprend une portion de préhension (2) qui est placée à proximité d'un côté d'une face supérieure (7) du corps principal (1a),
la borne de connexion (17) est disposée à proximité du côté où la portion de préhension (2) est placée,
la portion de préhension (2) comprend une portion en forme de tige qui est approximativement parallèle à la face supérieure (7), et
le bloc-batterie (1) comprend une deuxième portion de préhension (3) en forme de tige qui s'étend approximativement perpendiculairement à la portion de préhension (2) depuis une portion centrale de la portion de préhension (2).

2. Bloc-batterie selon la revendication 1,
dans lequel un évidement (6) est prévu dans la face supérieure (7) du corps principal (1a) et à une position au-dessous de la deuxième portion de préhension (2).

3. Bloc-batterie selon la revendication 1 ou 2,
dans lequel la deuxième portion de préhension (3) s'étendant depuis la portion de préhension (2) comporte une extrémité connectée à une saillie en forme de crête (4) qui est formée sur la face supérieure (7) du corps principal (1a).

4. Bloc-batterie selon la revendication 1 ou 2,
dans lequel le corps principal (1a) comporte quatre faces latérales (10, 11, 13, 15), parmi lesquelles la face latérale (13) à l'opposé de la face latérale (10) sur le côté où la portion de préhension (2) est placée est formée dans une forme de face plate, et les trois faces latérales (10, 11, 15) restantes sont formées dans une forme de face incurvée.
